# EUROPEAN PATENT SPECIFICATION

(11) **EP 1 190 761 B1**
(45) Date of publication and mention of the grant of the patent: **29.04.2009**
(21) Application number: 01122940.8
(22) Date of filing: 25.09.2001
(51) Int. Cl.: B01D 53/94

(54) **Exhaust gas purifying catalyst**
Abgasreinigungskatalysator
Catalyseur pour la purification de gaz d'échappement

(30) Priority: 26.09.2000 JP 2000292183
(43) Date of publication of application: 27.03.2002
(73) Proprietor: Daihatsu Motor Co., Ltd., Ikeda-shi, Osaka (JP)
(72) Inventor: Uenishi, Mari, Ikeda-shi, Osaka (JP); Tan, Isao, Ikeda-shi, Osaka (JP); Tanaka, Hirohisa, Ikeda-shi, Osaka (JP)
(74) Representative: Barz, Peter

(56) References cited:
- EP-A- 0 988 890
- EP-A- 1 013 334
- EP-A- 1 052 008
- EP-A- 1 053 779

## Description

### Field of the Invention

The present invention relates to an exhaust gas purifying catalyst for effectively purifying carbon monoxides (CO), hydrocarbons (HC) and nitrogen oxides (NOx) contained in exhaust gas from an automotive engine.

### Description of Background Art

Three-way catalysts for simultaneously purifying carbon monoxides (CO), hydrocarbons (HC) and nitrogen oxides (NOx) contained in the exhaust gas usually carry noble metals such as platinum, rhodium and palladium, and are now in wide use as exhaust gas purifying catalysts. Of these noble metals contained in the exhaust gas purifying catalysts, rhodium exhibits excellent activity for oxidation and reduction and develops an excellent effect in purification of NOx in particular. For this reason, a variety of proposed exhaust gas purifying catalysts use rhodium as their essential component and support platinum or palladium in combination with rhodium.

In the meantime, rhodium is expensive and there has been a strong industrial desire to produce an exhaust gas purifying catalyst that requires the smallest possible quantity of rhodium for effectively developing the desired effect.

It is the object of the present invention to provide an exhaust gas purifying catalyst that requires the smallest possible quantity of rhodium for effectively developing the desired activity to produce an excellent purifying performance economically.

EP-A-1053779 relates to a catalytic converter for cleaning exhaust gas comprising a heat resistant support having a catalytic coating containing zirconium complex oxide particles loaded with Pt and Rh, cerium complex oxide particles loaded with Pd, and particles of a heat resistant oxide. The catalyst may further comprise cerium complex oxide loaded with at least one of Pt and Rh. This reference also describes multi-layer coatings wherein a lower layer may comprise Pd-supporting cerium complex oxide.

EP-A-1052008 describes a catalytic converter for cleaning exhaust gas comprising a heat resistant support which is coated with zirconium complex oxide particles loaded with Pt and Rh. The coating may further comprise cerium complex oxide particles loaded with Pd.

### SUMMARY OF THE INVENTION

The present invention provides a novel exhaust gas purifying catalyst comprising a lower layer directly coated on a catalyst carrier and an upper layer, wherein
the lower layer comprises an alumina supporting palladium thereon, and
the upper layer comprises a zirconium complex oxide supporting rhodium and platinum thereon, and a cerium complex oxide supporting platinum and/or palladium thereon.

It is preferable that the zirconium complex oxide comprises zirconium and cerium in such a proportion that the zirconium content is more than the cerium content, and the cerium complex oxide comprises cerium and zirconium in such a proportion that the cerium content is more than the zirconium content.

In the exhaust gas purifying catalyst of the present invention, it is preferable that the zirconium complex oxide is a heat-resisting oxide expressed by the general formula (1) given below:

Zr_{1-(a+b)}CeₐN_{b}O_{2-c} (1)

(In the formula, N represents alkali earth metal or rare earth metal, c represents oxygen vacancy, a represents a number of 0.10-0.35, b represents a number of 0-0.20, and 1-(a+b) represents a number of 0.45-0.90), and that the cerium complex oxide is a heat-resisting oxide expressed by the general formula (2) given below:

Ce_{1-(x+y)}ZrₓM_{y}O_{2-z} (2)

(In the formula, M represents alkaline earth metal or rare earth metal, z represents oxygen vacancy, x represents a number of 0.20-0.70, y represents a number of 0-0.20, and 1-(x+y) represents a number of 0.10-0.80).

It is preferable that the alkaline earth metal represented by N in the general formula (1) and the alkaline earth metal represented by M in the general formula (2) comprises at least one material selected from the group consisting of Mg, Ca, Sr and Ba, and the rare earth metal represented by N in the general formula (1) and the rare earth metal represented by M in the general formula (2) comprises at least one material selected from the group consisting of Y, Sc, La, Pr and Nd.

The exhaust gas purifying catalyst of the present invention is in the form of a coating layer formed on a catalyst carrier. Preferably the quantity of rhodium supported is less than 1g per liter of catalyst carrier.

The exhaust gas purifying catalyst of the present invention further comprises alumina on which palladium and optionally platinum are supported.

It is preferable that at least a part of the zirconium complex oxide and/or the cerium complex oxide is a solid solution. Further, it is preferable that the proportion of platinum supported on the zirconium complex oxide and on the cerium complex oxide is in the range of 1-5 parts by weight of platinum supported on the cerium complex oxide per part by weight of platinum supported on the zirconium complex oxide.

The exhaust gas purifying catalyst of the present invention is in the form of an outermost layer of a coating layer having multiple layers and formed on a catalyst carrier.

The exhaust gas purifying catalyst of the present invention requires only a small quantity of rhodium and nevertheless exhibits excellent activity for both oxidation and reduction and develops an excellent effect in purification of NOx in particular, It develops the activity effectively and exhibits an excellent purifying performance economically even in endurance running at high temperature. Accordingly, the exhaust gas purifying catalyst of the present invention is suitable for use as an automotive exhaust gas purifying catalyst.

### BRIEF DESCRIPTION OF THE DRAWINGS

In the drawing:

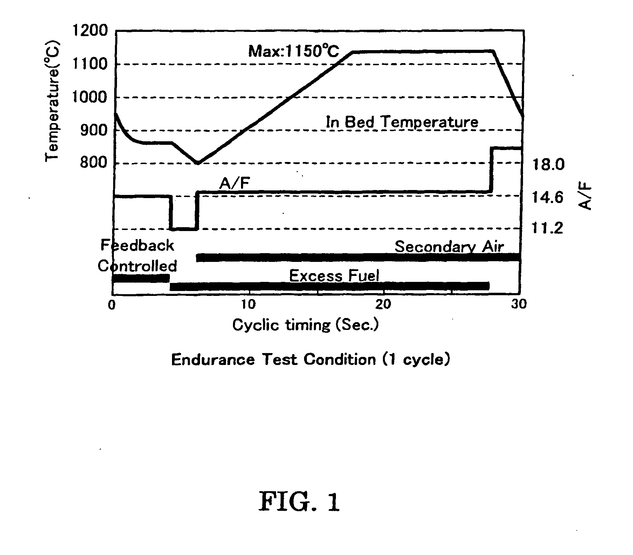

FIG. 1 is a time chart showing a process in one cycle of a 1,150°C endurance test.

### DETAILED DESCRIPTION OF PREFERRED EMBODIMENTS

The exhaust gas purifying catalyst of the present invention comprises a zirconium complex oxide on which rhodium and platinum are supported and a cerium complex oxide on which platinum and/or palladium are supported.

It is preferable that the zirconium complex oxide comprises zirconium and cerium in such a proportion that the zirconium content is more than the cerium content, and the zirconium complex oxide is a heat-resisting oxide expressed by the following general formula (1):

Zr_{1-(a+b)}CeₐN_{b}O_{2-c} (1)

(In the formula, N represents alkali earth metal or rare earth metal, c represents oxygen vacancy, a represents a proportion of atom of 0.10-0.35, b represents a proportion of atom of 0-0.20, and 1-(a+b) represents a proportion of atom of 0.45-0.90).

The alkaline earth metals represented by N include, for example, Be (beryllium), Mg (magnesium), Ca (calcium), Sr (strontium), Ba (barium), and Ra (radium). Mg, Ca, Sr and Ba can be cited as the preferable alkaline earth metal. The rare earth metals represented by N include, for example, Y (yttrium), Sc (scandium), La (lanthanum), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium). Y, Sc, La, Pr and Nd can be cited as the preferable rare earth metal. These alkaline earth metals or the rare earth metals may be used in single or in combination of two or more.

The proportion of atoms of N represented by b is in the range of 0-0.20, which means that not more than 0.20 of N is contained in the heat-resisting oxide, if any. When the proportion of atoms of N exceeds 0.20, the specific surface area may be reduced.

The proportion of atoms of cerium (Ce) represented by a is in the range of 0.10-0.35. When the proportion of atoms of Ce is less than 0.10, the specific surface area may be reduced.

Consequently, the proportion of atoms of zirconium (Zr) represented by 1-(a+b) is preferably in the range of 0.45 to 0.90. When this range is not fulfilled, the intended specific surface area and the intended heat resisting property may not be provided. Further preferably, the proportion of atoms of Zr is in the range of 0.65-0.90.

In the formula (1), c represents oxygen vacancy, which means the vacancy in a fluorite crystal lattice which is usually formed by the oxides of Zr, Ce and N.

This zirconium complex oxide can be produced by known methods. For instance, cerium oxide powder is added to water to form a slurry, first. Then, an aqueous solution in which zirconium salt and alkaline earth metal salt and/or rare earth metal salt are contained at a prescribed stoichiometric ratio is added to the slurry and stirred. Then, the mixture is oxidized.

Cerium oxide powder of large specific surface area should preferably be used to provide an increased oxygen storage capacity, though commercially available powders of cerium oxide can be used. The slurry is formed by adding about 10-50 parts by weight of water per part by weight of cerium oxide powder.

The zirconium, alkaline earth metal and/or rare earth metal salts include, for example, inorganic salts such as sulfates, nitrates, hydrochlorides and phosphates, and organic acid salts such as acetates and oxalates. Nitrates can be cited as the preferable ones. The zirconium salt and the alkaline earth metal salt and/or the rare earth metal salt are dissolved in water in a proportion of 1 part by weight of each to 0.1-10 parts by weight of water in respective amounts within the range of the above-mentioned specific proportions of atoms.

After the aqueous solution is added to the slurry mentioned above and fully mixed by stirring, the mixture is oxidized. The oxidization process can be performed as follows. First, the mixture is dried under reduced pressure by use of a vacuum dryer, preferably at about 50-200°C for about 1-48 hours, to thereby produce a dried material. Then, the dried material is baked at about 350-1,000°C. or preferably about 400-700°C, for about 1-12 hours, or preferably about 2-4 hours. Preferably, in the baking procedure, at least a part of the heat-resisting oxide is allowed to turn into a solid solution, to improve the heat-resisting property of the oxide. Desirable baking conditions for forming the solid solution are properly determined, depending on the composition of the heat-resisting oxide and the proportion thereof.

The zirconium complex oxide can also be obtained by the following method : First, a salt solution containing zirconium, cerium and alkaline earth metal and/or rare earth metal is prepared in such a manner as to establish the prescribed stoichiometric ratio. Then, an aqueous alkaline solution is added to the solution, to coprecipitate the salts including zirconium, cerium and alkaline earth metal and/or rare earth metal. Then, the coprecipitated material is oxidized. In this method, the salts illustrated above can be used. The aqueous alkaline solutions that can properly be used include, for example, known buffers, in addition to aqueous solutions of salts of alkali metals such as sodium and potassium and ammonia. Preferably, the aqueous alkaline solution is so prepared that after the addition of the aqueous alkali solution, the solution has a PH of about 8-11. An oxidization process identical to the process mentioned above can be used after the coprecipitated material is filtrated and washed.

Further, the zirconium complex oxide can be obtained by the following method: First, a mixed alkoxide solution including zirconium, cerium and alkaline earth metal and/or rare earth metal is prepared in such a manner as to establish the prescribed stoichiometric ratio. Then, deionized water is added to the mixed alkoxide solution to cause coprecipitation or hydrolysis. Then, the coprecipitated product or the hydrolyzed product is oxidized. In this method, the mixed alkoxide solution can be prepared by mixing the alcoholates of zirconium, cerium and alkaline earth metal and/or rare earth metal in an organic solvent such as toluene and xylene. The alkoxides to form the alcoholates include methoxide, ethoxide, propoxide, butoxide and alkoxyalkolate thereof such as ethoxyethylate or methoxypropylate. An oxidization process identical to that mentioned above can be used after the coprecipitated product or the hydrolyzed product is filtrated and washed.

It is preferable that the cerium complex oxide comprises cerium and zirconium in such a proportion that the cerium content is more than the zirconium content, and the cerium complex oxide is a heat-resisting oxide expressed by the following general formula (2):

Ce_{1-(x+y)}ZrₓM_{y}O_{2-z} (2)

(In the formula, M represents alkaline earth metal or rare earth metal, z represents oxygen vacancy, x represents a proportion of atoms of 0.20-0.70, y represents a proportion of atoms of 0-0.20, and 1-(x+y) represents a proportion of atoms of 0.10-0.80).

The alkaline earth metals or rare earth metals represented by M include the same as those mentioned above. Mg, Ca, Sr and Ba can be cited as the preferable alkaline earth metal. Y, Sc, La, Pr and Nd can be cited as the preferable rare earth metal. These alkaline earth metals or the rare earth metals may be used in single or in combination of two or more.

The proportion of atoms of M represented by y is in the range of 0-0.20, which means that not more than 0.20 of M is contained, if any.

The proportion of atoms of Zr represented by x is in the range of 0.20-0.70. Deterioration of the heat resisting property may be caused when the proportion of atoms of Zr is less than 0.20. On the other hand, deterioration of oxygen storage capacity may be caused due to a lack of Ce when the proportion of atoms of Zr is more than 0.70.

Consequently, the proportion of atoms of Ce represented by 1-(x+y) is in the range of 0.10 to 0.80. Preferably, the proportion of atoms of Ce is in the range of 0.35-0.70.

Z represents oxygen vacancy, which means the vacancy in a fluorite crystal lattice which is usually formed by the oxides of Ce, Zr and M.

This cerium complex oxide can be obtained by known methods using the same processes as those mentioned above.

In the exhaust gas purifying catalyst of the present invention, rhodium and platinum are supported the on zirconium complex oxide. The activity of rhodium can be developed effectively by supporting rhodium and platinum on the zirconium complex oxide.

The method of allowing rhodium and platinum to be supported on the zirconium complex oxide is not limited to any particular method. Any known method may be used. For instance, after a salt solution containing rhodium and a salt solution containing platinum are prepared, respectively, the zirconium complex oxide is impregnated with the salt solutions in sequence and then is baked.

In this method, the salt solutions illustrated above may be used. In practice, aqueous nitrate solutions, dinitrodiammine nitrate solutions, aqueous chloride salt solutions and the like are used. To be more specific, rhodium salt solutions that may preferably be used include, for example, rhodium nitrate solutions and rhodium chloride solutions, and platinate solutions that may preferably be used include, for example, dinitrodiammine platinum nitrate solutions chloroplatinic solutions and quadrivalent platinum ammine solutions. Preferably, after the zirconium complex oxide is impregnated with rhodium and platinum, it is dried at about 50-200°C for about 1-48 hours for each of the impregnations and further is baked at about 350-1,000°C for about 1-12 hours. Alternatively, a salt solution containing both rhodium and platinum is prepared, the zirconium complex oxide is impregnated with this solution and then is baked.

According to another method of allowing rhodium and platinum to be supported on the zirconium complex oxide a salt solution or a mixed alkoxide solution, either of which contains zirconium, cerium and alkaline earth metal and/or rare earth metal, is coprecipitated or hydrolyzed together with a salt solution of rhodium and a salt solution of platinum to cause the rhodium and platinum to be coprecipitated together with the components of the zirconium complex oxides and then the coprecipitated product is oxidied.

In the exhaust gas purifying catalyst of the present invention, instead of rhodium being supported on the cerium complex oxide, platinum and/or palladium are supported thereon. Thereby, the quantity of rhodium used can be reduced, while the oxygen storage capacity can be developed effectively.

The method of allowing platinum and/or palladium to be supported on the cerium complex oxide is not limited to any particular method. Any of the known methods, such as the above-mentioned methods, may be used. Preferably, platinum is supported on the cerium complex oxide. In practice, palladium salt solutions such as palladium nitrate solutions, dinitrodiammine palladium nitrate solutions and quadrivalent palladium ammine nitrate solutions are preferably used.

In the exhaust gas purifying catalyst of the present invention, the zirconium complex oxide on which rhodium and platinum are supported and the cerium complex oxide on which platinum and/or palladium are supported are mixed. The zirconium complex oxide and the cerium complex oxide can be mixed by any known method. For example, the oxides may be formed into a slurry after they are mixed, or may alternatively be mixed after they are formed into a slurry.

The exhaust gas purifying catalyst of the present invention is in the form of a coating layer formed on a catalyst carrier. The catalyst carriers used are not limited to any particular catalyst carrier. For example, a known honeycomb monolithic carrier formed of cordierite and the like, may be used. The exhaust gas purifying catalyst can be formed as a coating layer on the catalyst carrier, for example, by the following ways. For example, zirconium complex oxide and cerium complex oxide are formed into slurries, respectively, by adding water to each of them, first, and then those slurries are mixed together. Then, the mixed slurries are coated on the catalyst carriers. After having dried at about 50-200°C for about 1-48 hours, they are baked at about 350-1,000°C for about 1-12 hours. To give another example, after a powder of zirconium complex oxide and a powder of cerium complex oxide are mixed, they are formed into a slurry by adding water thereto. Then, the slurry is coated on the catalyst carrier. After having dried at about 50-200°C for about 1-48 hours, they may be baked further at about 350-1,000°C for about 1-12 hours.

In the exhaust gas purifying catalyst of the present invention thus obtained, the cerium complex oxide is preferably in the proportion of 40-150g, or further preferably 80-120g, and the zirconium complex oxide is preferably in the proportion of 20-100g, or further preferably 40-60g, per liter of catalyst carrier. Also, the quantity of rhodium supported is preferably less than 1g, further preferably not more than 0.8g, or particularly in the range of 0.2-0.5g, per liter of catalyst carrier. The quantity of platinum supported is preferably in the range of 0.5-2g, or further preferably 0.7-1.5g, per liter of catalyst carrier. It should be noted that in the exhaust gas purifying catalyst of the present invention, all of the rhodium is supported on the zirconium complex oxide, but platinum may be supported on the cerium complex oxide as well as on the zirconium complex oxide. In the case where platinum is supported on the cerium complex oxide as well as on the zirconium complex oxide, platinum is preferably supported on the cerium complex oxide in the range of 1-5 parts by weight, or preferably 2-3 parts by weight, per part by weight of platinum supported on the zirconium complex oxide.

When all of the palladium is supported on the cerium complex oxide, the quantity of palladium supported is preferably in the range of 1-5g, or preferably 1.3-2.5g, per liter of catalyst carrier. When palladium is supported in combination with platinum, an adequately reduced quantity of palladium is supported on the cerium complex oxide.

Also, for example, alumina on which platinum and/or palladium are supported, or cerium complex oxide and alumina on which no noble metals, such as rhodium, platinum and palladium, are supported may properly be mixed in the exhaust gas purifying catalyst of the present invention, depending on its intended purposes and applications. Those materials can then be mixed at the same time when the zirconium complex oxide and cerium complex oxide are respectively formed into slurries by adding water thereto. Alternatively, they may be formed into their respective slurries and then mixed with the slurries including zirconium complex oxide and the cerium complex oxide.

When alumina on which platinum and/or palladium are supported is mixed in the exhaust gas purifying catalyst of the present invention, the amount of alumina is preferably 20-150g or further preferably 35-100g. The quantity of platinum supported is preferably in the range of 0.1-2g, or further preferably 0.5-1.5g, per liter of catalyst carrier. The quantity of palladium supported is preferably in the range of 0.5-5g, or further preferably 0.7-2.5g, per liter of catalyst carrier.

The exhaust gas purifying catalyst of the present invention is present in the form of an outermost layer of a coating having multiple layers (i.e. the outermost layer of at least two layers) and formed on the catalyst carrier.

The slurries containing components of the respective layers may be coated on the catalyst carrier one after another and then dried and baked for each layer in sequence.

For example, when the exhaust gas purifying catalyst of the present invention is present in the form of two layers on the catalyst carrier, the lower layer (first layer) comprises alumina supporting Pd thereon, and is directly coated on the catalyst carrier; the second layer (upper layer) comprises zirconium complex oxide and cerium complex oxide. In this case, it is preferable that the total amounts of alumina, zirconium complex oxide and cerium complex oxide contained in the first and second layers fall within the ranges mentioned above

A further component of the lower layer is, for example, at least one component selected from cerium complex oxide, and zirconium complex oxide. For instance, cerium complex oxide in the range of 20-70g and alumina in the range of 20-100g per liter of catalyst carrier are preferably used. Platinum may also be supported on the lower layer. The quantity of platinum and palladium supported are preferably in the range of 0.4-5g respectively per liter of catalyst carrier.

For supporting palladium, it is preferable that the layer on which palladium is supported further comprises a sulfate, carbonate, nitrate and/or acetate of Ba, Ca, Sc, Mg or La. When these sulfate, carbonate, nitrate and/or acetate are contained in that layer, the catalyst is prevented from being poisoned, for example, by hydrocarbon (HC), so that the catalytic activity is prevented from being deteriorated. The proportion in which the sulfate, carbonate, nitrate and/or acetate are contained is properly selected, depending on the intended purposes and applications. The layers containing the sulfate, carbonate, nitrate and/or acetate may be formed, for example, by mixing sulfate, carbonate, nitrate and/or acetate in the slurries used for forming the respective layers.

The exhaust gas purifying catalyst of the present invention thus obtained requires only a small quantity of rhodium supported to exhibit an excellent activity for both oxidation and reduction and to develop an excellent effect in purification of NOx in particular, even in endurance running at high temperature. Accordingly, the exhaust gas purifying catalyst of the present invention is suitable for use as an automotive exhaust gas purifying catalyst.

### EXAMPLES

In the following, the present invention will be described further specifically with reference to Examples and Comparative Examples. The present invention is not in any manner limited to the illustrated Examples and Comparative Examples.

### Preparation of cerium complex oxide A

0.1 mol of cerium methoxypropylate, 0.09 mol of zirconium methoxypropylate and 0.01 mol of yttrium methoxypropylate were added to 200 ml of toluene and stirred for dissolution, whereby a mixed alcoxide solution was prepared. Then, 80 ml of deionized water was dropped to the mixed alcoxide solution to hydrolyze the alcoxide. Then, the toluene and the deionized water were distilled off from the hydrolyzed solution and evaporated for dryness to produce the precursor of Ce_{0.50}Zr_{0.45}Y_{0.05}O_{1.97}. This was dried through circulation drying at 60°C for 24 hours and then was baked at 450°C for 3 hours in an electric furnace, to thereby produce a powder of cerium complex oxide A having the composition of Ce_{0.50}Zr_{0.45}Y_{0.05}O_{1.97}.

### Preparation of zirconium complex oxide B

In accordance with the same method as in the preparation of cerium complex oxide A, a powder of zirconium complex oxide B having the following composition was produced.

Zirconium complex oxide B: Zr_{0.78}Ce_{0.16}La_{0.02}Nd_{0.04}O_{1.97}

### EXAMPLE 1

### Formation of lower layer:

First, palladium nitrate solution was impregnated into a powder of Al₂O₃. After having been dried, this was baked at 600°C for 3 hours in an electric furnace to thereby prepare a powder of Pd supported on Al₂O₃. Then, the powder of Pd supported on Al₂O₃, the powder of cerium complex oxide A and a powder of BaSO₄ were mixed and pulverized in a ball mill, and distilled water was added thereto to prepare a slurry. The slurry was applied to inner surfaces of cells of monolithic carriers (105.7mm in diameter, 114mm in length, and 1,000mL in capacity; the same applies to the following) to coat the inner surfaces of the cells with the slurry. After having been dried, they were baked at 600°C for 3 hours to thereby form the lower layers. It should be noted that the lower layers were formed in a proportion of 50g of powder of Pd supported on Al₂O₃ (containing 2.1g of Pd), 45g of cerium complex oxide A and 20g of BaSO₄ per liter of monolithic carrier.

### Formation of upper layer:

First, dinitrodiammine platinum nitrate solution was impregnated into a powder of zirconium complex oxide B. After having been dried, this was baked at 600°C for 3 hours in an electric furnace, so that the platinum was supported on the zirconium complex oxide B. Further, rhodium nitrate solution was impregnated into the zirconium complex oxide B containing Pt-. Then, after having been dried, this was baked at 600°C for 3 hours in an electric furnace to prepare a powder of zirconium complex oxide B containing Pt-Rh.

Then, dinitrodiammine platinum nitrate solution was impregnated into a powder of cerium complex oxide A. After having been dried, this was baked at 600°C for 3 hours in an electric furnace to prepare a powder of cerium complex oxide A carrying Pt.

Then, the powder of zirconium complex oxide B containing Pt-Rh, the powder of cerium complex oxide A containing Pt and the powder of Al₂O₃ were mixed and pulverized in a ball mill, and distilled water was added thereto to prepare a slurry. The slurry was applied to inner surfaces of cells of the monolithic carriers on which the lower layers were already formed, to coat the inner surfaces of the cells with the slurry. After having been dried, they were baked at 600°C for 3 hours to form upper layers, whereby a two-layered exhaust gas purifying catalyst was produced.

It should be noted that the upper layers were formed in a proportion of 40g zirconium complex oxide B comprising 0,5 g Pt and 0.4g Rh, 70g of cerium complex oxide A comprising 1.0g of Pt and 50g of Al₂O₃ per liter of monolithic carriers.

### COMPARATIVE EXAMPLE 1

### Formation of lower layer:

Lower layers identical in components and in proportions to those of Example 1 were formed in the same operation as in Example 1.

### Formation of upper layer:

First, dinitrodiammine platinum nitrate solution was impregnated into a powder of zirconium complex oxide B. After having been dried, this was baked at 600°C for 3 hours in an electric furnace, so that the platinum was supported on the zirconium complex oxide B. Further, rhodium nitrate solution was impregnated into the platinum supported zirconium complex oxide B. Then, after having been dried, this was baked at 600°C for 3 hours in an electric furnace to prepare a powder of zirconium complex oxide B carrying Pt-Rh.

Then, dinitrodiammine platinum nitrate solution was impregnated into a powder of cerium complex oxide A. After having been dried, this was baked at 600°C for 3 hours in the electric furnace, so that platinum was supported on the cerium complex oxide A. Further, rhodium nitrate solution was impregnated into the cerium complex oxide A containing Pt. Then, after having been dried, this was baked at 600°C for 3 hours in the electric furnace to prepare a powder of cerium complex oxide A containing Pt-Rh.

Then, the powder of zirconium complex oxide B containing Pt-Rh, the powder of cerium complex oxide A containing Pt-Rh and a powder of Al₂O₃ were mixed and pulverized in a ball mill, and distilled water was added thereto to prepare a slurry. The slurry was applied to inner surfaces of cells of the monolithic carriers on which the lower layers were already formed, to coat the inner surfaces of the cells with the slurry. After having been dried, they were baked at 600°C for 3 hours to form upper layers, whereby a two-layered exhaust gas purifying catalyst was produced.

It should be noted that the upper layers were formed in a proportion of 40g of zirconium complex oxide B comprising 0.5g of Pt and 0,3g of Rh, 70g of cerium complex oxide A comprising 1.0g of Pt and 0.1g of Rh, and 50g of Al₂O₃ per liter of monolithic carriers.

### COMPARATIVE EXAMPLE 2

### Formation of lower layer:

Lower layers identical in components and in proportions to those of Example 1 were formed in the same operation as in Example 1.

### Formation of upper layer:

First, rhodium nitrate solution was impregnated into a powder of zirconium complex oxide B. After having been dried, this was baked at 600°C for 3 hours in an electric furnace to prepare a powder of zirconium complex oxide B comprising Rh.

Then, dinitrodiammine platinum nitrate solution was impregnated into a powder of cerium complex oxide A. After having been dried, this was baked at 600°C for 3 hours in an electric furnace to prepare a powder of cerium complex oxide A comprising Pt.

Then, the powder of zirconium complex oxide B comprising Rh the powder of cerium complex oxide A comprising Pt and the powder of Al₂O₃ were mixed and pulverized in a ball mill, and distilled water was added thereto to prepare a slurry. The slurry was applied to inner surfaces of cells of monolithic carriers on which the lower layers were already formed, to coat the inner surfaces of the cells with the slurry. After having been dried, they were baked at 600°C for 3 hours to form upper layers, whereby a two-layered exhaust gas purifying catalyst was produced.

It should be noted that the upper layers were formed in a proportion of 40g of zirconium complex oxide B comprising 0,4 g of Rh, 70g of cerium complex oxide A comprising 1,5 g of Pt and 50g of Al₂O₃ per liter of monolithic carriers.

### COMPARATIVE EXAMPLES 3

An exhaust gas purifying catalyst identical to that of Example 1 was produced in the same operation as in Example 1, except that a single coating consisting of only the components of the upper layers was formed directly on each cell without any lower layer being formed thereon.

### COMPARATIVE EXAMPLE 4

An exhaust gas purifying catalyst identical to that of Comparative Example 1 was produced in the same operation as in Comparative Example 1, except that a single coating consisting of only the components of the upper layers was formed directly on each cell without any lower layer being formed thereon.

### COMPARATIVE EXAMPLE 5

An exhaust gas purifying catalyst identical to that of Comparative Example 2 was produced in the same operation as in Comparative Example 2, except that a single coating consisting of only the components of the upper layers was formed directly on each cell without any lower layer being formed thereon.

### COMPARATIVE EXAMPLE 6

### Formation of lower layer:

First, palladium nitrate solution was impregnated into a powder of cerium complex oxide A. After having been dried, this was baked at 600°C for 3 hours in an electric furnace to thereby prepare a powder of cerium complex oxide A comprising Pd. Then, a powder of Pd supported cerium complex oxide A, comprising Pd, a powder of Al₂O₃ and a powder of BaSO₄ were mixed and pulverized in a ball mill, and distilled water was added thereto to prepare a slurry. The slurry was applied to inner surfaces of cells of monolithic carriers, to coat the inner surfaces of the cells with the slurry. After having been dried, they were baked at 600°C for 3 hours to thereby form the lower layers. It should be noted that the lower layers were formed in a proportion of 45g of cerium complex oxide A comprising 2.1g of Pd, 50g of Al₂O₃ and 20g of BaS04 per liter of monolithic carrier.

### Formation of upper layer:

First, a dinitrodiammine platinum nitrate solution was impregnated into a powder of zirconium complex oxide B. After having been dried, this was baked at 600°C for 3 hours in an electric furnace, so that the platinum was supported on the zirconium complex oxide B. Further, rhodium nitrate solution was impregnated into the zirconium complex oxide B comprising Pt. Then, after having been dried, this was baked at 600°C for 3 hours in the electric furnace to prepare a powder zirconium complex oxide B comprising Pt-Rh.

Then, dinitrodiammine platinum nitrate solution was impregnated into a powder of cerium complex oxide A. After having been dried, this was baked at 600°C for 3 hours in the electric furnace to prepare a powder of cerium complex oxide A comprising Pt.

Then, the powder of zirconium complex oxide B comprising Pt-Rh, the powder of cerium complex oxide A comprising Pt and the powder of Al₂O₃ were mixed and pulverized in a ball mill, and distilled water was added thereto to prepare a slurry. The slurry was applied to inner surfaces of cells of the monolithic carriers on which the lower layers were already formed, to coat the inner surfaces of the cells with the slurry. After having been dried, they were baked at 600°C for 3 hours to form upper layers, whereby a two-layered exhaust gas purifying catalyst was produced.

It should be noted that the upper layers were formed in a proportion of 40g of zirconium complex oxide B (Pt 0.75g of Pt and 0.4g of Rh , 70g of cerium complex oxide A comprising 0.75g of Pt and 50g of Al₂O₃ per liter of monolithic carriers.

### COMPARATIVE EXAMPLE 7

An exhaust gas purifying catalyst identical to that of Comparative Example 6 was produced in the same operation as in Comparative Example 6, except that a single coating consisting of only the components of the upper layers was formed directly on each cell without any lower layer being formed thereon.

### COMPARATIVE EXAMPLE 8

First, dinitrodiammine platinum nitrate solution was impregnated into a powder of zirconium complex oxide B. After having been dried, this was baked at 600°C for 3 hours in an electric furnace, so that the platinum was supported on the zirconium complex oxide B. Further, rhodium nitrate solution was impregnated into the zirconium complex oxide B comprising Pt. Then, after having been dried, this was baked at 600°C for 3 hours in the electric furnace to prepare a powder of zirconium complex oxide B comprising Pt and Rh.

Then, dinitrodiammine platinum nitrate solution was impregnated into a powder of cerium complex oxide A. After having been dried, this was baked at 600°C for 3 hours in the electric furnace to prepare a powder of cerium complex oxide A comprising Pt.

Further, dinitrodiammine platinum nitrate solution was impregnated into a powder of Al₂O₃. After having been dried, this was baked at 600°C for 3 hours in the electric furnace to prepare a powder of Al₂O₃ comprising Pt.

Then, the powder of zirconium complex oxide B comprising Pt and Rh, the powder of cerium complex oxide A comprising Pt and the powder of Al₂O₃ comprising Pt were mixed and pulverized in a ball mill, and distilled water was added thereto to prepare a slurry. The slurry was applied to inner surfaces of cells of monolithic carriers, to coat the inner surfaces of the cells with the slurry. After having been dried, they were baked at 600°C for 3 hours to produce the exhaust gas purifying catalyst.

It should be noted that the exhaust gas purifying catalyst was formed in a proportion of 40g of zirconium complex oxide B comprising 0.5g of Pt and 0.4g of Rh, 70g of cerium complex oxide A comprising 0.5g of Pt and 50g of Al₂O₃ comprising Pt per liter of monolithic carriers.

### EXAMPLE 2

### Formation of lower layer:

First, palladium nitrate solution was impregnated into a powder of Al₂O₃. After having been dried, this was baked at 600°C for 3 hours in an electric furnace to thereby prepare a powder of Al₂O₃ comprising Pd. Then, the powder of Al₂O₃ comprising Pd, a power of cerium complex oxide A and a powder of BaSO₄ were mixed and pulverized in a ball mill, and distilled water was added thereto to prepare a slurry. The slurry was applied to inner surfaces of cells of monolithic carriers, to coat the inner surfaces of the cells with the slurry. After having been dried, they were baked at 600°C for 3 hours to thereby form the lower layers. It should be noted that the lower layers were formed in a proportion of 50g of the powder of Al₂O₃ comprising 0.4g of Pd, 30g of cerium complex oxide A and 20g of BaSO4 per liter of monolithic carrier.

### Formation of upper layer:

First, dinitrodiammine platinum nitrate solution was impregnated into a powder of zirconium complex oxide B. After having been dried, this was baked at 600°C for 3 hours in the electric furnace, so that the platinum was supported on the zirconium complex oxide B. Further, rhodium nitrate solution was impregnated into the zirconium complex oxide B comprising Pt. Then, after having been dried, this was baked at 600°C for 3 hours in the electric furnace to prepare a powder of zirconium complex oxide B comprising Pt and Rh.

Then, dinitrodiammine platinum nitrate solution was impregnated into a powder of cerium complex oxide A. After having been dried, this was baked at 600°C for 3 hours in the electric furnace to prepare a powder of cerium complex oxide A comprising Pt.

Further, dinitrodiammine platinum nitrate solution was impregnated into a powder of Al₂O₃. After having been dried, this was baked at 600°C for 3 hours in the electric furnace to prepare a powder of Al₂O₃ comprising Pt.

Then, the powder of zirconium complex oxide B comprising Pt and Rh, the powder of cerium complex oxide A comprising Pt and the powder of Al₂O₃ comprising Pt were mixed and pulverized in a ball mill, and distilled water was added thereto to prepare a slurry. The slurry was applied to inner surfaces of cells of the monolithic carriers on which the lower layers were already formed, to coat the inner surfaces of the cells with the slurry. After having been dried, they were baked at 600°C for 3 hours to form upper layers, whereby a two-layered exhaust gas purifying catalyst was produced.

It should be noted that the upper layers were formed in a proportion of 40g of zirconium complex oxide B comprising 0.175g of Pt and 0.7g of Rh, 70g of cerium complex oxide A comprising 0.175g of Pt and 70g of the powder of Al₂O₃ comprising 0.35g of Pt per liter of monolithic carriers.

### COMPARATIVE EXAMPLE 9

First, dinitrodiammine platinum nitrate solution was impregnated into a powder of zirconium complex oxide B. After having been dried, this was baked at 600°C for 3 hours in an electric furnace, so that the platinum was supported on the zirconium complex oxide B. Further, rhodium nitrate solution was impregnated into the zirconium complex oxide B Pt. Then, after having been dried, this was baked at 600°C for 3 hours in the electric furnace to prepare a powder of zirconium complex oxide B comprising Pt and Rh.

Then, dinitrodiammine platinum nitrate solution was impregnated into a powder of cerium complex oxide A. After having been dried, this was baked at 600°C for 3 hours in the electric furnace to prepare a powder of cerium complex oxide A comprising Pt.

Thereafter, dinitrodiammine platinum nitrate solution was impregnated into a powder of Al₂O₃. After having been dried, this was baked at 600°C for 3 hours in the electric furnace to prepare a powder of Al₂O₃ comprising Pt.

Further, palladium nitrate solution was impregnated into a powder of Al₂O₃. After having been dried, this was baked at 600°C for 3 hours in the electric furnace to thereby prepare a powder of Al₂O₃ comprising Pd.

Then, the powder of zirconium complex oxide B comprising Pt-Rh, the powder of cerium complex oxide A comprising Pt, the powder of Al₂O₃ comprising Pt, the powder of Al₂O₃ comprising Pd, a powder of cerium complex oxide A and a powder of BaSO₄ were mixed and pulverized in a ball mill, and distilled water was added thereto to prepare a slurry. The slurry was applied to inner surfaces of cells of the monolithic carriers, to coat the inner surfaces of the cells with the slurry. After having been dried, they were baked at 600°C for 3 hours to produce the exhaust gas purifying catalyst.

It should be noted that the exhaust gas purifying catalyst was formed in a proportion of 40g of zirconium complex oxide B comprising 0.23g of Pt and 0.7g of, Rh, 70g of cerium complex oxide A comprising 0.23g of Pt, 70g of powder of Al₂O₃ comprising 0.23g of Pt, 50g of powder of Al₂O₃ comprising 0.4g of Pd, 30g of cerium complex oxide A, and 20g of BaSO₄ per liter of monolithic carriers.
1,150°C Endurance Test:
A V type eight cylinder engine of 4,000 cm³ was loaded on a real automobile and the exhaust gas purifying catalysts of Examples and Comparative Examples were connected to a bank of the engine (4 cylinders). With the cycle shown in FIG. 1 as a single cycle (30 seconds), the cycle was repeated for 48 hours for the endurance test of the exhaust gas purifying catalysts of Examples and Comparative Examples.

One cycle was set as shown in FIG. 1. Specifically, for 0-5 seconds, a gaseous miture of gasoline and air which was kept in the stoichimetric ratio of theoretical combustion air (A/F=14.6) under feedback control was fed to the engine and the internal temperature of the exhaust gas purifying catalysts (catalyst bed) was set to be around 850°C. For 5-7 seconds, the feedback was allowed to open and fuel was injected excessively, so that fuel-rich mixed gas (A/F=11.2) was fed to the engine. For 7-28 seconds, while an excessive amount of fuel was kept on being fed to the engine with the feedback open, secondary air was introduced from the outside of the engine through an inlet tube upstream of the catalytic parts, to cause the excessive fuel to react with the secondary air in the interior of the catalyst bed, so as to raise the temperature of the catalyst bed. In this time period, the highest temperature was 1,150°C and the A/F was substantially kept at the amount of theoretical combustion air of 14.8. For the last time period of 28-30 seconds, no fuel was fed but secondary air was fed to the engine to put the engine into a lean state. The fuel which was fed was a gasoline to which phosphorus compound was added. The total amount added in the endurance test was 0.41g in terms of the element of phosphorous. The temperature of the catalyst bed was measured by a thermocouple inserted into a center part of the honeycomb carrier.

### Measurement of CO-NOx cross-point purifying rate

The catalytic parts of the catalysts subjected to the endurance test mentioned above were annealed at 900°C for 2 hours. Sequentially, the mixed gas was fed to the engine, while it was varied from a fuel-rich state to a lean state. The exhaust gas produced by the combustion in the engine was purified by use of the exhaust gas purifying catalysts of Examples and Comparative Examples. The CO and NOx purifying rates were measured. The purifying rate measured when the purifying rates of these components were coincident with each other was defined as the CO-NOx cross-point purifying rate.

It is to be noted that the measurement of the purifying rates was performed on the engine as such, i.e. the engine was not mounted in an automobile. The temperature of the exhaust gas fed to the parts of the catalysts was set at 460°C and space velocity SV was set at 80,000/h. The results are shown in TABLE 1.

**TABLE 1**

| | carrier for Rh (weight ratio) | carrier for Pt (weight ratio) | Coating layer | CO-NOx cross-point purifying rate (%) | layer containing Pd |
|---|---|---|---|---|---|
| Ex. 1 | Zr-based only | Zr-based: Ce based 1 : 2 | Two-layer Upper layer | 96 | Lower layer Al₂O₃ |
| Compara. Ex. 1 | Zr-based: Ce based 1 : 3 | Zr-based: Ce based 1 : 2 | Two-layer Upper layer | 87 | Lower layer Al₂O₃ |
| Compara. Ex. 2 | Zr-based only | Ce-based only | Two-layer Upper layer | 86 | Lower layer Al₂O₃ |
| Compara. Ex. 3 | Zr-based only | Zr-based: Ce based 1 : 2 | Single layer | 92 | Nil |
| Compara. Ex. 4 | Zr-based: Ce based 1 : 3 | Zr-based: Ce based 1 : 2 | Single layer | 82 | Nil |
| Compara. Ex. 5 | Zrbased only | Ce based only | Single layer | 76 | Nil |
| Compara. Ex. 6 | Zr-based only | Zr-based: Ce based 1 : 1 | Two-layer Upper layer | 94 | Lower layer Ce-based |
| Compara. Ex. 7 | Zr-based only | Zr-based: Ce based 1 : 1 | Single layer | 90 | Nil |
| Compara. Ex. 8 | Zr-based only | Zr-based:Ce-based:Al₂O₃ 1 : 1: 1 | Single layer | 91 | Nil |
| Ex. 2 | Zr-based only | Zr-based:Ce-based:Al₂O₃ 1 : 1: 2 | Two-layer Upperlayer | 92 | Lower layer Al₂O₃ |
| Compara. Ex. 9 | Zr-based only | Zr-based:Ce-based:Al₂O₃ 1 : 1: 1 | Single layer | 90 | Al₂O₃ |

| | | | | | |
|---|---|---|---|---|---|
| Note: Zr-based: Zirconium complex oxide; Ce-based: Cerium complex oxide | | | | | |

While the illustrative examples of the present invention are provided in the above description, such is for illustrative purpose only and it is not to be construed restrictively.

## Claims

1. An exhaust gas purifying catalyst comprising a lower layer directly coated on a catalyst carrier and an upper layer, wherein
the lower layer comprises an alumina supporting palladium thereon, and
the upper layer comprises a zirconium complex oxide supporting rhodium and platinum thereon, and a cerium complex oxide supporting platinum and/or palladium but no rhodium thereon.

2. The exhaust gas purifying catalyst according to claim 1, wherein the zirconium complex oxide comprises zirconium and cerium in such a proportion that the zirconium content is more than the cerium content, and wherein the cerium complex oxide comprises cerium and zirconium in such a proportion that the cerium content is more than the zirconium content.

3. The exhaust gas purifying catalyst according to claim 2, wherein the zirconium complex oxide is a heat resisting oxide expressed by the general formula (1):
Zr_{1-(a+b)}CeaNbO_{2-c} (1)
wherein N represents alkaline earth metal or rare earth metal, c represents oxygen vacancy, a represents a number of 0.10-0.35, b represents a number of 0-0.20, and 1-(a+b) represents a number of 0.45-0.90, and
wherein the cerium complex oxide is a heat resisting oxide expressed by the general formula (2):
Ce_{1-(x+y)}ZrₓM_{y}O_{2-z} (2)
wherein M represents alkaline earth metal or rare earth metal, z represents oxygen vacancy, x represents a number of 0.20-0.70, y represents a number of 0-0.20, and 1-(x+y) represents a number of 0.10-0.80.

4. The exhaust gas purifying catalyst according to claim 3, wherein the alkaline earth metal represented by N in the general formula (1) and the alkaline earth metal represented by M in the general formula (2) comprise at least one element selected from the group consisting of Mg, Ca, Sr and Ba, and wherein the rare earth metal represented by N in the general formula (1) and the rare earth metal represented by M in the general formula (2) comprise at least one element selected from the group consisting of Y, Sc, La, Pr and Nd.

5. The exhaust gas purifying catalyst according to claim 1, wherein the quantity of rhodium supported is less than 1 g per liter of catalyst carrier.

6. The exhaust gas purifying catalyst according to claim 1, wherein the upper layer further comprises alumina supporting platinum and/or palladium thereon.

7. The exhaust gas purifying catalyst according to claim 1, wherein the upper layer further comprises alumina supporting platinum thereon.

8. The exhaust gas purifying catalyst according to claim 1, wherein at least a part of the zirconium complex oxide and/or the cerium complex oxide is a solid solution.

9. The exhaust gas purifying catalyst according to claim 1, wherein the proportion of platinum supported on the zirconium complex oxide and on the cerium complex oxide is in the range of 1-5 parts by weight of platinum supported on the cerium complex oxide per part by weight of platinum supported on the zirconium complex oxide.

10. The exhaust gas purifying catalyst according to claim 1, which is in the form of an outermost layer of a coating layer having multiple layers and formed on the catalyst carrier.

## Patentansprüche

1. Abgas-Reinigungskatalysator, umfassend eine untere Schicht, die direkt auf einem Katalysatorträger aufgetragen ist, und eine obere Schicht, wobei
die untere Schicht ein Aluminiumoxid, das Palladium darauf trägt, umfasst und
die obere Schicht ein Zirconium-Komplexoxid, das Rhodium und Platin darauf trägt, und ein Cer-Komplexoxid, das Platin und/oder Palladium, aber kein Rhodium darauf trägt, umfasst.

2. Abgas-Reinigungskatalysator nach Anspruch 1, wobei das Zirconium-Komplexoxid Zirconium und Cer in einem solchen Anteil umfasst, dass der Zirconiumgehalt größer als der Cergehalt ist, und wobei das Cer-Komplexoxid Cer und Zirconium in einem solchen Anteil umfasst, dass der Cergehalt größer als der Zirconiumgehalt ist.

3. Abgas-Reinigungskatalysator nach Anspruch 2, wobei das Zirconium-Komplexoxid ein wärmebeständiges Oxid ist, das ausgedrückt ist durch die allgemeine Formel (1):
Zr_{1-(a+b)}CeₐN_{b}O_{2-c} (1)
worin N ein Erdalkalimetall oder ein Seltenerdmetall ist, c eine Sauerstoffleerstelle ist, a eine Zahl von 0,10 bis 0,35 ist, b eine Zahl von 0 bis 0,20 ist und 1-(a+b) eine Zahl von 0,45 bis 0,90 ist, und
wobei das Cer-Komplexoxid ein wärmebeständiges Oxid ist, das ausgedrückt ist durch die allgemeine Formel (2):
Ce_{1-(x+y)}ZrₓM_{y}O_{2-z} (2)
wobei M ein Erdalkalimetall oder ein Seltenerdmetall ist, z eine Sauerstoffleerstelle ist, x eine Zahl von 0,20 bis 0,70 ist, y eine Zahl von 0 bis 0,20 ist und 1-(x+y) eine Zahl von 0,10 bis 0,80 ist.

4. Abgas-Reinigungskatalysator nach Anspruch 3, wobei das durch N in der allgemeinen Formel (1) dargestellte Erdalkalimetall und das durch M in der allgemeinen Formel (2) dargestellte Erdalkalimetall mindestens ein Element ausgewählt aus der Gruppe bestehend aus Mg, Ca, Sr und Ba umfasst und wobei das durch N in der allgemeinen Formel (1) dargestellte Seltenerdmetall und das durch M in der allgemeinen Formel (2) dargestellte Seltenerdmetall mindestens ein Element ausgewählt aus der Gruppe bestehend aus Y, Sc, La, Pr und Nd umfasst.

5. Abgas-Reinigungskatalysator nach Anspruch 1, wobei die Menge von geträgertem Rhodium weniger als 1 g pro Liter Katalysatorträger ist.

6. Abgas-Reinigungskatalysator nach Anspruch 1, wobei die obere Schicht ferner Aluminiumoxid, das Platin und/oder Palladium darauf trägt, umfasst.

7. Abgas-Reinigungskatalysator nach Anspruch 1, wobei die obere Schicht ferner Aluminiumoxid, das Platin darauf trägt, umfasst.

8. Abgas-Reinigungskatalysator nach Anspruch 1, wobei mindestens ein Teil des Zirconium-Komplexoxids und/oder des Cer-Komplexoxids eine feste Lösung ist.

9. Abgas-Reinigungskatalysator nach Anspruch 1, wobei der Anteil von Platin, der auf dem Zirconium-Komplexoxid und auf dem Cer-Komplexoxid geträgert ist, im Bereich von 1 bis 5 Gewichtsteilen Platin, das auf dem Cer-Komplexoxid geträgert ist, pro Gewichtsteil Platin, das auf dem Zirconium-Komplexoxid geträgert ist.

10. Abgas-Reinigungskatalysator nach Anspruch 1, der in Form einer äußersten Schicht von einer Beschichtung mit mehreren Schichten und gebildet auf dem Katalysatorträger ist.

## Revendications

1. Catalyseur d'épuration de gaz d'échappement, comprenant une couche inférieure, déposée directement sur un porte-catalyseur, et une couche supérieure, dans lequel :
- la couche inférieure comprend une alumine supportant du palladium,
- et la couche supérieure comprend un oxyde complexe de zirconium supportant du rhodium et du platine, et un oxyde complexe de cérium supportant du platine et/ou du palladium, mais pas de rhodium.

2. Catalyseur d'épuration de gaz d'échappement, conforme à la revendication 1, dans lequel l'oxyde complexe de zirconium comprend du zirconium et du cérium, en un rapport tel qu'il contient plus de zirconium que de cérium, et l'oxyde complexe de cérium comprend du cérium et du zirconium, en un rapport tel qu'il contient plus de cérium que de zirconium.

3. Catalyseur d'épuration de gaz d'échappement, conforme à la revendication 2, dans lequel l'oxyde complexe de zirconium est un oxyde thermorésistant, de formule générale (1) suivante :
Zr_{1-(a+b)}CeₐN_{b}O_{2-c} (1)
dans laquelle N représente un métal alcalino-terreux ou un métal du groupe des terres rares, c représente la proportion de lacunes d'oxygène, a représente un nombre qui vaut de 0,10 à 0,35 et b représente un nombre qui vaut de 0 à 0,20, étant entendu que le nombre 1-(a+b) vaut de 0,45 à 0,90,
et dans lequel l'oxyde complexe de cérium est un oxyde thermorésistant, de formule générale (2) suivante :
Ce_{1-(x+y)}ZrₓM_{y}O_{2-z} (2)
dans laquelle M représente un métal alcalino-terreux ou un métal du groupe des terres rares, z représente la proportion de lacunes d'oxygène, x représente un nombre qui vaut de 0,20 à 0,70 et y représente un nombre qui vaut de 0 à 0,20, étant entendu que le nombre 1-(x+y) vaut de 0,10 à 0,80.

4. Catalyseur d'épuration de gaz d'échappement, conforme à la revendication 3, dans lequel le métal alcalino-terreux représenté par N dans la formule générale (1) et le métal alcalino-terreux représenté par M dans la formule générale (2) comprennent au moins un élément choisi dans l'ensemble constitué par les magnésium, calcium, baryum et strontium, et dans lequel le métal du groupe des terres rares représenté par N dans la formule générale (1) et le métal du groupe des terres rares représenté par M dans la formule générale (2) comprennent au moins un élément choisi dans l'ensemble constitué par les yttrium, scandium, lanthane, praséodyme et néodyme.

5. Catalyseur d'épuration de gaz d'échappement, conforme à la revendication 1, dans lequel la quantité de rhodium supporté vaut moins de 1 gramme par litre de support de catalyseur.

6. Catalyseur d'épuration de gaz d'échappement, conforme à la revendication 1, dans lequel la couche supérieure comprend en outre une alumine supportant du platine et/ou du palladium.

7. Catalyseur d'épuration de gaz d'échappement, conforme à la revendication 1, dans lequel la couche supérieure comprend en outre une alumine supportant du platine.

8. Catalyseur d'épuration de gaz d'échappement, conforme à la revendication 1, dans lequel au moins une partie de l'oxyde complexe de zirconium et/ou de l'oxyde complexe de cérium est une solution solide.

9. Catalyseur d'épuration de gaz d'échappement, conforme à la revendication 1, dans lequel le rapport des quantités de platine supportées par l'oxyde complexe de zirconium et par l'oxyde complexe de cérium se situe dans la gamme de 1 à 5 parties en poids de platine supporté par l'oxyde complexe de cérium pour 1 partie en poids de platine supporté par l'oxyde complexe de zirconium.

10. Catalyseur d'épuration de gaz d'échappement, conforme à la revendication 1, qui se présente comme la couche externe d'un revêtement multicouche formé sur un porte-catalyseur.
